# EUROPÄISCHE PATENTSCHRIFT

(11) **EP 1 112 567 B1**
(45) Veröffentlichungstag und Bekanntmachung des Hinweises auf die Patenterteilung: **28.05.2003**
(21) Anmeldenummer: 99944557.0
(22) Anmeldetag: 30.08.1999
(51) Int. Cl.: G10L 17/00, H04M 3/38

(54) **VERFAHREN ZUR KONTROLLE DER ZUGANGSBERECHTIGUNG FÜR DIE SPRACHTELEFONIE AN EINEM FESTNETZ- ODER MOBILTELEFONANSCHLUSS SOWIE KOMMUNIKATIONSNETZ**
METHOD FOR CHECKING ACCESS AUTHORISATION FOR VOICE TELEPHONY AT A FIXED NETWORK OR MOBILE TELEPHONE CONNECTION AND CORRESPONDING COMMUNICATIONS NETWORK
PROCEDE DE CONTROLE D'AUTORISATION D'ACCES POUR LA TELEPHONIE VOCALE AU NIVEAU D'UN POSTE D'ABONNE A UN RESEAU FIXE OU D'UN POSTE D'ABONNE MOBILE, ET RESEAU DE COMMUNICATION

(30) Priorität: 09.09.1998 DE 19841166
(43) Veröffentlichungstag der Anmeldung: 04.07.2001
(73) Patentinhaber: Deutsche Telekom AG, 53113 Bonn (DE)
(72) Erfinder: SUSEN, Axel, D-52062 Aachen (DE); BROCK, Stefan, D-53737 Sankt Augustin (DE)
(86) Internationale Anmeldenummer: EP9906371
(87) Internationale Veröffentlichungsnummer: WO00014730

(56) Entgegenhaltungen:
- EP-A- 0 451 695
- WO-A-96/08907
- US-A- 5 093 855
- US-A- 5 623 539
- US-A- 5 717 743
- SCHALK T B: "SPEAKER VERIFICATION OVER THE TELEPHONE NETWORK" , SPEECH TECHNOLOGY, MAN-MACHINE VOICE COMMUNICATIONS,US,MEDIA DIMENSIONS INC. NEW YORK, VOL. 5, NR. 3, PAGE(S) 32-35 XP000207992 ISSN: 0744-1355 Seite 32, linke Spalte, Zeile 1 - Zeile 8 Seite 32, rechte Spalte, Zeile 9 - Zeile 18 Seite 33, linke Spalte, Zeile 4 - Zeile 17 Seite 34, linke Spalte, Zeile 11 - Zeile 30 Abbildung 1
- FEUSTEL T C ET AL: "SPEAKER IDENTITY VERIFICATION OVER TELEPHONE LINES: WHERE WE ARE AND WHERE WE ARE GOING" , CH,ZURICH: ETH ZENTRUM-KT, PAGE(S) 181-182 XP000089314 Seite 181, linke Spalte, Zeile 21 - Zeile 45 Seite 181, rechte Spalte, Zeile 22 - Zeile 29; Abbildung 1

## Beschreibung

### Technisches Gebiet:

Die Erfindung betrifft ein Verfahren zur Kontrolle der Zugangsberechtigung für die Sprachtelefonie an einem Festnetz- oder Mobiltelefonanschluß sowie ein Kommunikationsnetz mit einer derartigen Zugangsberechtigungskontrolle.

### Stand der Technik:

Bei Nebenstellenanlagen für die Telekommunikation mit einer Vielzahl von Nebenstellen, die von wechselnden Personen benutzt werden, aber auch bei mobilen Endgeräten, sogenannten Handys, besteht das Problem des Mißbrauchs durch unberechtigte Dritte oder durch nicht autorisierte Unternehmensangehörige. Beispielsweise werden von Nebenstellenanschlüssen eines großen Unternehmens häufig Privatgespräche auf Kosten des Arbeitgebers geführt. Des weiteren wird bei Telefonieren von einem gestohlenen oder sonstwie abhanden gekommenen Mobiltelefon stets die Rechnung des rechtmäßigen Inhabers belastet, ohne daß dieser dies unmittelbar verhindern könnte.

Um Mißbrauch bei Nebenstellenanlagen zu verhindern, sind Verfahren bekannt, bei welchen der Nutzer eines Endgerätes einen Zugangscode eingeben muß, um eine Amtsverbindung und/oder Verbindung zu bestimmten Zielrufnummern herstellen zu können. Bei diesen Verfahren gibt der Teilnehmer über die Tastatur des Endgerätes einen persönlichen Zugangscode (PIN) ein, welcher von der Nebenstellenanlage ausgewertet und mit einer Zulassungstabelle verglichen wird. Auf diese Weise ist auch eine personenbezogene Abrechung der anfallenden Gebühren möglich. Wurde die Berechtigung des Teilnehmers auf diese Weise festgestellt, so ist der entsprechende Nebenstellenanschluß zur Herstellung einer Amts- oder Fernverbindung freigeschaltet.

Dieses Verfahren der Codeeingabe vor jedem Anruf ist jedoch sehr umständlich und für Nebenstellenanschlüsse, von denen standardmäßig viel telefoniert wird, z.B. einem Sekretariat oder einem Büro eines leitenden Angestellten, wegen des zusätzlichen Zeitaufwandes nicht praktikabel. Daher sind diese Anschlüsse häufig von der Zugangskontrolle ausgenommen, so daß von ihnen personenunabhängig stets frei telefoniert werden kann und das Problem des Mißbrauchs weiter besteht.

Es ist weiterhin bekannt, Mißbrauch im nachhinein durch Analyse der Gesprächszeiten, der Richtung und des angerufenen Teilnehmers bzw. der angerufenen Rufnummer aufzudecken. Dazu protokolliert die Nebenstellenanlage die geführten Gespräche, die Anrufsziele, die Gesprächsdauer und den dazugehörigen Nebenstellenanschluß. Eine ähnliche Kontrolle erfolgt im Netz-Management-System eines öffentlichen Telefonnetzes. Es werden beispielsweise alle Gespräche, welche länger als eine vorbestimmte Dauer sind, nachträglich oder während der Verbindung hinsichtlich des Anrufsziels untersucht. Dabei kann ein Mißbrauch festgestellt werden, wenn das Anrufziel nicht einer vorbestimmten Gruppe von Rufnummern, welche beispielsweise Kunden des Unternehmens zugeordnet sind, zugeordnet werden kann. Einzelne Nebenstellenanschlüsse, wie etwa die von leitenden Angestellten. können auch hier von der Mißbrauchskontrolle ausgenommen sein.

Allerdings ist auch bei dieser Art der Mißbrauchkontrolle nur eine anschlußbezogene Feststellung eines Mißbrauches möglich. Es können solche Fälle nicht erfaßt werden, bei denen dieselbe Person sich unbefugt wechselnder Endgeräte bedient. Des weiteren kann der Mißbrauch in der Regel nur im nach hinein festgestellt werden, ein unbefugt geführtes Gespräch aber nicht unterbunden werden.

Die US-5,623,539 betrifft eine Vorrichtung und ein Verfabren zur Überwachung einer Telefonverbindung auf unberechtigte Benutzung. Zu diesem Zweck sind von sämtlichen Personen, die zur Benutzung der Telefonverbindung berechtigt sind, Stimmproben gespeichert. Während eines Gespräches, welches über die Telefonverbindung geführt wird, wird die übertragene Stimminformation abgegriffen und mittels geeigneter Mittel in einzelne Stimmproben zerlegt, wobei jede der so gewonnenen Stimmproben der Stimme eines der Gesprächsteilnehmer entspricht. Diese dem Telefongespräch entnommenen Stimmproben werden mit den gespeicherten Stimmproben verglichen. Die Telefonverbindung wird nur dann als berechtigt akzeptiert, wenn eine hinreichende Übereinstimmung zwischen mindestens einer der gespeicherten Stimmproben und mindestens einer der aus dem Telefongespräch gewonnenen Stimmproben festgestellt wird.

Die US 5,093,855 betrifft ein Verfahren und eine Einrichtung zur Sprechererkennung in einer Telefonvermittlungsstelle, bei welchen abgetastete Sprachproben über die Telefonleitung der Vermittlungsstelle zugeführt und dort mit zuvor bereits gespeicherten Sprachproben verglichen werden. Falls der Sprecher erkannt wird, wird ein erstes Signal, andernfalls ein zweites Signal ausgegeben.

Die Veröffentlichung "Speaker Identity Verification over Telephone Lines: Where we are and where we are going" von T.C. Feustel und G.A. Velius, International Carenaham Conference, Zürich 1989, behandelt die Sprechererkennung und die damit erreichbare Sicherheit z.B. gegen unbefugte Benutzung von Telefonen. Hierbei wird auch die Möglichkeit erwähnt, die Sicherheit durch eine Kombination von Sprechererkennung und der Verwendung von Passworten oder PIN-Nummern zu erhöhen.

### Technische Aufgabe:

Der Erfindung liegt daher die Aufgabe zugrunde, ein Verfahren zur Kontrolle der Zugangsberechtigung für die Sprachtelefonie zur Verfügung zu. stellen, welches die normalen Abläufe beim Telefonieren nicht behindert und es erlaubt, Mißbrauchsversuche direkt zu erkennen und gegebenenfalls zu unterbinden.

### Offenbarung der Erfindung:

Die Aufgabe wird gelöst durch ein Verfahren zur Kontrolle der Zugangsberechtigung für die Sprachtelefonie an einem Festnetz- oder Mobiltelefonanschluß mittels Spracherkennung gemäß Anspruch 1. Vorteilhafte Weiterbildungen der Erfindung sind Gegenstand der Unteransprüche.

Erfindungsgemäß werden vor oder nach Aufbau der Kommunikationsverbindung zum gerufenen Teilnehmer Sprachsignale des rufenden Teilnehmers aufgezeichnet. Beispielsweise kann der Teilnehmer nach Eingabe der Zielrufnummer, aber vor Verbindungsaufbau automatisch zur akustischen Eingabe eines Passwortes aufgefordert werden. Alternativ findet die Aufzeichnung der Sprachsignale während des laufenden Gesprächs statt, wobei die Sprachsignale des rufenden Teilnehmers parallel an den gerufenen Teilnehmer weitergeleitet werden, so daß die Kommunikation nicht gestört wird. In beiden Fällen wird das Sprachsignal des rufenden Teilnehmers mittels Spracherkennungs-Algorithmen analysiert und zum Zwecke der Zuordnung mit einem Referenzdatensatz oder mehreren Referenzdatensätzen verglichen. Der Referenzdatensatz bzw. die Referenzdatensätze ist bzw. sind dabei dem Festnetz- bzw. Mobiltelefonanschluß in eindeutiger Weise zugeordnet, legen insbesondere den zugangsberechtigten Personenkreis fest. Erfindungsgemäß wird die Kommunikationsverbindung automatisch unterbrochen bzw. nicht aufgebaut und/oder es wird ein Alarm ausgelöst, falls die aufgezeichnete Sprachprobe keinem Referenzdatensatz zugeordnet werden kann. Ansonsten wird die Kommunikationsverbindung in gewohnter Weise weitergeführt bzw. hergestellt.

Vorzugsweise erfolgt die Spracherkennung nach Beginn der Kommunikationsverbindung online, d.h. direkt während der Kommunikationsverbindung. Die Sprachsignale des rufenden Teilnehmers werden wie beim polizeilichen oder nachrichtendienstlichen Abhören aus der Datenleitung abgegriffen und einer Spracherkennungseinheit zugeführt, welche online auswertet. Die Sprachdaten werden parallel an den Kommunikationspartner übertragen. Kann die Spracherkennungseinheit die Zuordnung zu einem Referenzdatensatz treffen, so wird die Analyse des Sprachsignals beendet und die Datenverarbeitungskapazität der Spracherkennungseinheit steht zur Identifizierung weiterer Anrufer zur Verfügung.

Alternativ zur Spracherkennung während der Verbindung kann die Zuordnung des Sprechers zu einem Abrechnungskonto vor Verbindungsaufbau im Rahmen einer vom Sprecher zu durchlaufenden Authentifizierungsprozedur vorgenommen werden. Dabei wird der Benutzer des Telefons zur Eingabe einer Sprachprobe aufgefordert, und die Verbindung erst dann aufgebaut, wenn die Sprachprobe identifiziert und als der Sprecher als autorisiert erkannt wurde.

Neben der Online-Spracherkennung kann das Sprachsignal des rufenden Teilnehmers auch aufgezeichnet und als Sprachprobe zwischengespeichert werden. Die gespeicherte Sprachprobe wird dann noch während oder nach der Kommunikationsverbindung analysiert.

Das erfindungsgemäße Verfahren hat den großen Vorteil, daß vor Aufbau der Kommunikationsverbindung keine umständliche manuelle Passworteingabe notwendig ist, sondern der Zugang sprachgesteuert hergestellt bzw. aufrechterhalten wird. Bei Zugangskontrolle nach Verbindungsaufbau wird das Verfahren parallel zum normalen Gesprächsablauf durchgeführt, wobei die Gesprächsteilnehmer nichts von der Zugangskontrolle merken, sondern zeitsparend in gewohnter Weise telefonieren können. Zur Spracherkennung und Teilnehmeridentifizierung werden diejenigen Sprachsignale untersucht, welcher auch an den Kommunikationspartner übertragen werden. Die Übertragung von Sprachsignalen zwischen den Gesprächsteilnehmern wird dabei nicht beeinträchtigt. Somit kann im Prinzip jeder Anschluß auf Mißbrauch kontrolliert werden, ohne den normalen Ablauf beim Telefonieren durch eine zusätzliche Zugangscodeeingabe zu beeinträchtigen.

Zur Spracherkennung sind mehrere Möglichkeiten bekannt und zur Realisierung der Erfindung einsetzbar. Es gibt Spracherkennungs-Algorithmen zur Erkennung von Bedeutungsinhalten gesprochener Sprache, welche eine aktuelle Sprachprobe mit einer bereits hinterlegten Sprachprobe, die einem bestimmten gesprochenen Wort entspricht, vergleichen. Dabei entspricht die hinterlegte Sprachprobe beispielsweise einem gesprochenem Wort, dessen Textdarstellung ebenfalls hinterlegt ist. Durch Feststellung einer Übereinstimmung zwischen der aktuellen und der hinterlegten Sprachprobe kann somit auch der aktuellen Spracheingabe eine Textdarstellung, z. B. als ASCII-Darstellung zugewiesen werden, wodurch prinzipiell Inhalte einer Sprachmitteilung erkennbar sind. Solche Spracherkenner werden beispielsweise bei der Sprachsteuerung von Computern und dergleichen eingesetzt.

Die hinterlegte Sprachprobe wird dabei in der Regel während einer Trainingsphase vom zukünftigen Benutzer eingegeben. Dies führt dazu, daß in der Regel auch nur die aktuelle Spracheingabe dieses Benutzers vom Spracherkenner zuverlässig erkannt werden kann, da sich auch bei gleichem Bedeutungsinhalt Sprachproben verschiedener Nutzer aufgrund des individuellen Sprachverhaltens unterscheiden.

Dieses Prinzip kann in einer Weiterbildung der Erfindung zur Kontrolle der Zugangsberechtigung an einem Telefonanschluß eingesetzt werden. Dabei sind die Referenzdatensätze Referenz-Sprachproben, welche bestimmten, von einer Person gesprochenen Wörtern entsprechen, z.B. Begrüßungsformeln, dem Vor- oder Zunamen einer zugangsberechtigten Person oder sonstigen, häufig in einem Telefongespräch vorkommenden Ausdrücken. Diese Sprachproben werden in einer Trainingsphase aufgezeichnet und in einem Speicher in digitaler Form als Referenzdatensatz hinterlegt. Zur Durchführung des Verfahrens analysieren die Spracherkennungs-Algorithmen die aufgezeichneten Sprachdaten hinsichtlich des Auftretens von Teilen, also einzelnen Wörtern oder Ausdrücken, die mit der Referenz-Sprachprobe innerhalb einer vorgegebenen Toleranz übereinstimmen. Wichtig ist dabei nicht der Bedeutungsinhalt der Referenz oder des aktuellen Sprachsignals, sondern allein das individuelle Sprachverhalten der Zugangsberechtigten bzw. telefonierenden Person, daß sich in einem bestimmten charakteristischen Muster der Referenz-Sprachprobe niederschlägt.

Aus diesem Grunde sieht eine andere bevorzugte Ausführungsform vor, kein eigentliches Worterkennungssystem wie das bereits geschilderte zu verwenden, sondern die eingegebenen Sprachsignale unabhängig von ihrem Bedeutungsinhalt nach bestimmten, für den Nutzer charakteristischen Sprachmustern analysieren. Eine bestimmte Sprachmelodie, Stimmlage, Dialekt und dergleichen, welche die Stimme einer Person für das menschliche Ohr nahezu einmalig erscheinen lassen, äußert sich in charakteristischen Merkmalen einer von dieser Personen genommenen Sprachprobe, z.B. einer bestimmten Frequenzverteilung, welche zur Identifizierung dieser Personen auf elektronischem Wege dienen kann. Erfindungsgemäß werden daher Referenz-Sprachmuster, z.B. Frequenz- oder Amplitudenmuster, die unabhängig vom Bedeutungsinhalt für eine Person charakteristisch sind, als Referenzdatensätze gespeichert. Sie werden beispielsweise durch statistische Auswertung einer Sprachprobe mittels eines entsprechenden Spracherkennungs-Algorithmus gewonnen. Zur Identifizierung der aktuellen, während eines Gesprächs aufgezeichneten Sprachprobe erstellen dann die Spracherkennungs-Algorithmen durch statistische Auswertung der Sprachsignale ein entsprechendes Sprachmuster derselben. Statistische Auswertung bezieht sich dabei in erster Linie auf eine Frequenzanalyse, wobei Klang und Stimmlage des Sprechers identifiziert werden können; dynamische Auswertung bezieht sich auf eine Auswertung der Dynamik des Sprachsignals, d.h. auf den Amplitudenverlauf und damit auf eine bestimmte Sprachmelodie. Beide Verfahren sind geeignet, einen Sprecher zur identifizieren. Dieses Sprachmuster wird dann mit den Referenz-Sprachmustern verglichen. Es wird festgestellt, ob die charakteristischen Merkmale beider Muster übereinstimmen. Wichtig dabei ist, daß zur Erstellung des Referenz-Sprachmusters aus einer Referenz-Sprachprobe derselbe Spracherkennungs-Algorithmus verwendet ist, mit welchem auch die aktuelle Sprachprobe analysiert wird.

Der Vorteil dieser Variante liegt darin, daß die Analyse der individuellen Sprachmuster eine wesentlich genauere Identifizierung der sprechenden Person ermöglicht als die Suche nach bestimmten Wörtern, welche zwar auch individuell geprägt sind, bei welchen die individuelle Prägung aufgrund der Kürze der Wörter jedoch unter Umständen nicht immer zuverlässig feststellbar ist. Die erste Variante eignet sich besonders für die Zugangskontrolle durch die Eingabe eines bestimmten gesprochenen Paßwortes, während die zweite Variante insbesondere zur verborgenen Kontrolle der Zugangsberechtigung während eines laufenden Gesprächs vorteilhaft ist.

Die Referenzdatensätze entprechen dem Kreis der zugangsberechtigten Personen, z. B. allen Angestellten eines Unternehmens, welche während ihrer Tätigkeit telefonieren müssen. Die Referenzdatensätze sind beispielsweise in einer Zulassungstabelle abgelegt. Dabei kann die Berechtigung einer Person auch für lediglich ausgewählte Rufnummern oder Verbindungsarten gegeben sein oder sich als Funktion der Tageszeit ändern.

Durch das erfindungsgemäße Verfahren kann in vorteilhafter Weise der Gebrauch von Endgeräten zur Herstellung gebührenpflichtiger Verbindungen durch nicht diesem zugangsberechtigten Kreis zugehörige Dritte unterbunden werden, wobei jedoch jeder Berechtigte von jedem Nebenstellenanschluß des Unternehmens telefonieren kann.

In einer weiteren vorteilhaften Weiterbildung der Erfindung wird die Zugangsberechtigung weiter nach Nebenstellenanschlüssen differenziert. Dabei ist der Referenzdatensatz bzw. die Referenzdatensätze einem Nebenstellenanschluß einer Nebenstellenanlage in eindeutiger Weise zugeordnet. Der Referenzdatensatz bzw. die Referenzdatensätze legt wiederum den Kreis der zugangsberechtigten, Personen, diesmal für einen einzelnen Nebenstellenanschluß, fest. Dadurch kann unterbunden werden, daß an sich zugangsberechtigte Personen an fremden Apparaten telefonieren. Dies ist wichtig für den Fall, daß einzelne Anschlüsse zwar für Amtsverbindungen freigeschaltet sind, von ihnen aber keine Fernverbindungen hergestellt werden können, während diese Beschränkung bei anderen Nebenstellenanschlüssen nicht besteht.

Für den Fall einer während der Kommunikationsverbindung durchgeführten Zugangskontrolle werden die Sprachsignale während eines vorbestimmten Zeitintervalls, z. B. 30 bis 60 Sekunden, abgegriffen, wobei die Aufzeichnung insbesondere direkt nach der Herstellung der Verbindung beginnt. Schon während des Abgreifens oder nach Ablauf des Zeitintervalls wird die Sprachprobe analysiert.

Aus Datenschutzgründen wird vorzugsweise die aufgezeichnete und gegebenenfalls zwischengespeicherte Sprachprobe nach Beendigung der Spracherkennung wieder gelöscht, falls sie einem Referenzdatensatz zugeordnet werden konnte. Falls es sich jedoch um einen Mißbrauchsversuch handelt, also keine automatische Zurodnung zu einem Referenzdatensatz und damit zu einer berechtigten Person möglich ist, bleiben die Sprachdaten vorzugsweise gespeichert. Sie können dann dazu dienen, den Sprecher zu identifizieren.

Um den Aufwand zur Kontrolle der Zugangsberechtigung so gering wie möglich zu halten, ist es vorteilhaft, wenn das Verfahren nur zu bestimmten Tages- und/oder Wochenzeiten und/oder nur über bestimmte Anrufziele, z. B. nur für Fernverbindungen, durchgeführt wird. Der betreffende Festnetz- oder Mobiltelefonanschluß oder einzelne Nebenstellenanschlüsse eines Festnetzanschlusses ist dann für Verbindungen außerhalb dieser Zeiten bzw. andere Anrufziele grundsätzlich gesperrt oder grundsätzlich freigeschaltet.

Des weiteren ist vorgesehen, daß die Zugangskontrolle durch Spracherkennung nicht durchgeführt wird, wenn der Nutzer vor Herstellung einer Kommunikationsverbindung eine Tastenkombination, z. B. einen PIN-Code, oder ein akustisches Signal, z. B. eine Folge von im Mehrfrequenzverfahren kodierten Signalen, eingibt und durch diesen Zugangscode seine Berechtigung nachweist.

Eine weitere vorteilhafte Weiterbildung der Erfindung sieht vor, daß die Anzahl der unberechtigten Zugangsbesuche registriert und der Anschluß gesperrt wird, wenn innerhalb eines vorbestimmten Zeitintervalls, z. B. eines Tages oder einer Stunde, mehr als eine vorbestimmte Anzahl derartiger Versuche erkannt wird. Des weiteren kann auch zunächst ein Alarm über das Netz-Management-System ausgelöst werden und ein Operator eingeschaltet werden.

Die Aufgabe wird weiterhin gelöst durch ein Kommunikationsnetz mit einer Mehrzahl von Festnetz- oder Mobilfunkanschlüssen sowie technischen. Mitteln zur Herstellung einer Kommunikationsverbindung zwischen zwei oder mehr Anschlüssen desselben oder eines anderen Kommunikationsnetzes, mit
a) Mitteln, die auf eine Datenleitung, über welche Sprachsignale vom rufenden Anschluß zum gerufenen Anschluß wenigstens teilweise übertragen werden, zuzugreifen und ein vom rufenden Anschluß übertragenes Sprachsignal aufzuzeichnen imstande sind;
b) wenigstens einem Speicher, in welchem Referenzdatensätze hinterlegt sind, welche einem zugangsberechtigten Personenkreis zugeordnet sind;
c) wenigstens einer Steuereinheit mit einer Spracherkennungseinheit, welche auf den Speicher für die Referenzdatensätze zuzugreifen und das abgegriffene Sprachsignal mittels Spracherkennungs-Algorithmen zu analysieren und durch Vergleich mit den Referenzdatensätzen die Zugangsberechtigung des rufenden Teilnehmers festzustellen imstande ist,
wobei die Steuereinheit die Erzeugung eines die Verbindung unterbrechenden Signals veranlaßt, wenn das Sprachsignal keinem der Referenzdatensätze zugeordnet werden kann,
dadurch gekennzeichnet, daß während der gesamten Kommunikationsverbindung in regelmäßigen zeitlichen Abständen Sprachproben aufgezeichnet werden und die Berechtigung des Sprechers in regelmäßigen zeitlichen Abständen überprüft wird.

Unter Kommunikationsnetz wird dabei die Gesamtheit aller Anschlüsse mit den Vermittlungsstellen bzw. Umsetzungsstationen und gegebenenfalls Datenleitungen und sonstiger Vermittlungs- und Übertragungsintelligenz verstanden. Die an der Erfindung beteiligten Elemente können allerdings nur in einem kleinen Teil des Netzes angeordnet sein, z.B. in einer Nebenstellenanlage. Das erfindungsgemäße Kommunikationsnetz ermöglicht vorteilhaft die Kontrolle der Zugangsberechtigung von Nutzern einzelner Anschlüsse und somit die Durchführung des erfindungsgemäßen Verfahrens.

Um die Sprachsignale bei einem detektierten Mißbrauch zur Ermittlung der unberechtigt telefonierenden Person verwerten zu können oder zur offline erfolgenden Sprachanalyse, weist das Kommunikationsnetz vorzugsweise wenigstens einen Speicher auf, in welchem die aufgezeichneten Sprachsignale als Sprachprobe zwischengespeichert sind.

Die Kontrolle der Zugangsberechtigung innerhalb des Kommunikationsnetzes kann erfindungsgemäß an verschiedenen Stellen innerhalb des Netzes stattfinden. Soll die Zugangsberechtigung von Nutzern einer Nebenstellenanlage kontrolliert werden, so ist die Steuereinheit und der Referenzdaten- bzw. gegebenenfalls der Sprachproben-Speicher vorzugsweise innerhalb der Nebenstellenanlage angeordnet. Die Steuereinheit ist beispielsweise Teil einer Datenverarbeitungsanlage, welche die von einzelnen Nebenstellenanschlüssen vorgenommenen Verbindungen protokolliert, einzelne Nebenstellenanschlüsse zeitabhängig oder für bestimmte Anrufziele sperrt und gegebenenfalls einen PIN-Code-Abfrage vornimmt.

Alternativ können die Steuereinheit und die entsprechenden Speicherplätze außerhalb des Kundenbereichs im eigentlichen Telefonnetz in einer Vermittlungsstelle angeordnet sein. Dabei sind im Referenzdaten-Speicher die Referenzdaten der Vermittlungsstelle zugeordneten Anschlüsse hinterlegt. Vorzugsweise sind die Referenzdaten anschlußspezifisch hinterlegt, so daß zu jedem Anschluß ein berechtigter Personenkreis definiert und von der Vermittlungsstelle überprüft wird. Wenn die Steuereinheit die Sprachprobe keinem der Referenzdatensätze zuordnen kann, veranlaßt sie die Vermittlungsstelle zur Erzeugung eines die Verbindung unterbrechenden Signals. Auf diese Weise kann mit einer gemeinsamen Steuereinheit die Zugangsberechtigung von Nutzern einer Vielzahl von Anschlüssen in der Vermittlungsstelle zentral kontrolliert werden, ohne das es einer Modifikation der Anschlüsse auf Kundenseite bedarf.

Die Zugangskontrolle kann weiter zentralisiert werden, indem die Steuereinheit und die entprechenden Speicher einem SCP (Service Control Point) eines Intelligenten Netzes zugeordnet sind und die Steuereinheit den SCP zur Erzeugung eines die Verbindung unterbrechenden Signals veranlaßt, wenn die Sprachprobe keinem der Referenzdatensätze zugeordnet werden kann. Das sogenannte Intelligente Netz ist dabei ein offenes Kommunikationsnetz, welches auf das traditionelle Telefonnetz aufsetzt und verschiedene Telefondienste mit neuen Leistungsmerkmalen ermöglicht, beispielsweise gebührenfreies Telefonieren unter bestimmten Rufnummern oder das Erreichen verschiedener Dienststellen eines Unternehmens unter einer über ein weiteres Gebiet einheitlichen Rufnummer. Der zentrale Rechner, welcher die dazu notwendigen Schaltinformationen enthält, ist der sogenannte SCP. Auch der Übergang von einem Telefonnetz eines Netzanbieters zu dem eines anderen Netzanbieters erfolgt über IN-ähnliche Strukturen.

Des weiteren ist das erfindungsgemäße Verfahren auch zur Kontrolle der Berechtigung eines Nutzers eines mobilen Endgerätes vorteilhaft einsetzbar.

Dazu wird ein mobiles Endgerät für die Telekommunikation vorgeschlagen mit
a) Mitteln, die auf eine Datenleitung, über welche Sprachsignale in elektronischer Form übertragen werden, zuzugreifen und ein eingegebenes und ein Sprachsignal aufzuzeichnen imstande sind;
b) wenigstens einem Speicher, in welchem wenigstens ein Referenzdatensatz bzw. mehrere Referenzdatensätze hinterlegt sind, welche einem zugangsberechtigten Personenkreis zugeordnet sind;
c) wenigstens einer Steuereinheit mit einer Spracherkennungseinheit welche auf den Speicher für die Referenzdatensätze zuzugreifen und das abgegriffene Sprachsignal mittels Spracherkennungs-Algorithmen zu analysieren und durch Vergleich mit den Referenzdatensätzen die Zugangsberechtigung des rufenden Teilnehmers festzustellen imstande ist, wobei die Steuereinheit die Erzeugung eines die Verbindung unterbrechenden Signals oder das Abschalten des Endgeräts veranlaßt, wenn das Sprachsignal keinem der Referenzdatensätze zugeordnet werden kann,
dadurch gekennzeichnet, daß während der gesamten Kommunikationsverbindung in regelmäßigen zeitlichen Abständen Sprachproben aufgezeichnet werden und die Berechtigung des Sprechers in regelmäßigen zeitlichen Abständen überprüft wird.

Der Referenzdatensatz bzw. die Referenzdatensätze ist dabei vorzugsweise auf dem Chip einer Mobiltelefonkarte gespeichert. Die dazu notwendige Sprachprobe hat der Besitzer des Mobiltelefons vorzugsweise beim Kauf der Mobiltelefonkarte abgegeben. Ein abhanden gekommenes Mobiltelefon ist somit zwar grundsätzlich funktionsfähig, die Mobiltelefonkarte jedoch, nur in Abhängigkeit vom richtigen Sprachmuster. Dadurch kann verhindert werden, daß mit einem abhanden gekommenen Mobiltelefon weiterhin auf Kosten des Eigentümers telefoniert wird.

Kurzbeschreibung der Zeichnung, in der zeigen:
- Figur 1: Schematisch den Ablauf des erfindungsgemäßen Verfahrens;
- Figur 2: ein weiteres Flußdiagramm des erfindungsgemäßen Verfahrens
- Figuren 3-5: Beispiele für Kommunikationsnetze zur Durchführung des erfindungsgemäßen Verfahrens.

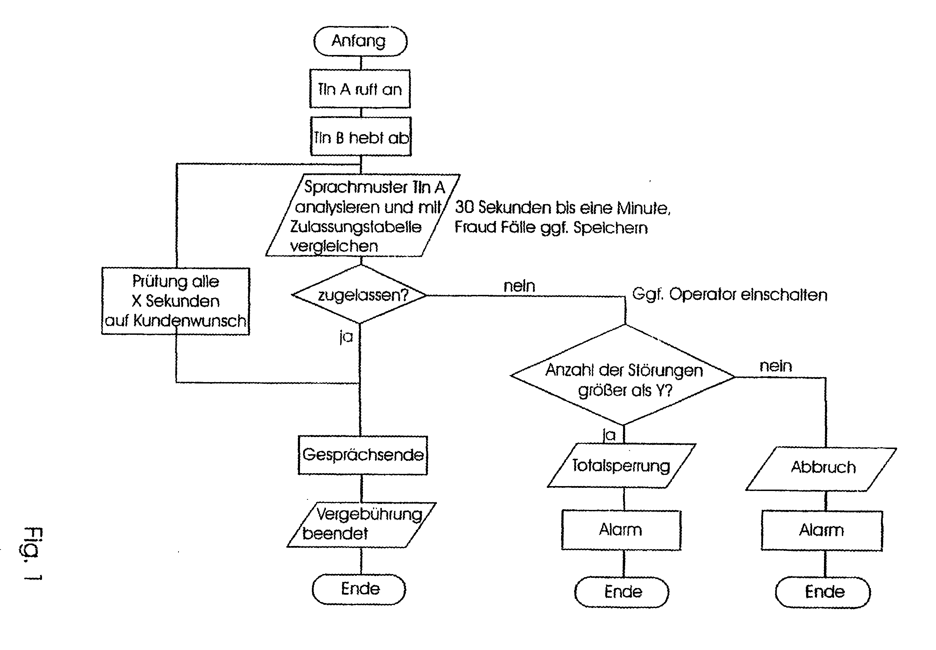

In Figur 1 ist der Ablauf des erfindungsgemäßen Verfahrens schematisch dargestellt. Zu Beginn des Verfahrens ruft Teilnehmer A eine Zielrufnummer an. Die Kommunikationsverbindung ist hergestellt, sobald Teilnehmer B abhebt. Üblicherweise beginnen beide Teilnehmer zu sprechen. Die Sprachsignale des rufenden Teilnehmers A werden automatisch abgegriffen und analysiert, wobei die Analyse eine vorbestimmte Zeitspanne, etwa 30 Sekunden bis eine Minute, dauert. Das Zugreifen auf eine Verbindungsleitung über welche die Sprachsignale zwischen beiden Teilnehmern übertragen werden, erfolgt ohne Störung des übertragenen Signals, so daß die Zugangskontrolle das Gespräch nicht beeinträchtigt.

Das Sprachsignal des Teilnehmers A wird analysiert, d.h. mit Spracherkennungsalgorithmen komprimiert, wobei das dadurch erstellte Sprachmuster mit in einer Zulassungstabelle hinterlegten Referenzdatensätzen verglichen wird. Kann das aktuelle Sprachsignal einem der Referenzdatensätze zugeordnet werden, so gilt der Teilnehmer als zugelassen und als zum Telefonieren berechtigt. Die Zulassungstabelle kann dabei spezifisch auf den Anschluß insgesamt oder einen Nebenstellenanschluß bezogen sein und/oder zeitabhängig sein.

Ist der rufende Teilnehmer A zugelassen, so wird die Kommunikationsverbindung bis zum Gesprächsende gehalten. Im einfachsten Fall erfolgt keine weitere Kontrolle mehr. Um die Sicherheit gegen Mißbräuche weiter zu erhöhen, wird das Verfahren in regelmäßigen zeitlichen Abständen wiederholt, also erneut das Sprachsignal des Teilnehmers A analysiert

Wird der Teilnehmer als nicht zugelassen erkannt, weil sein Sprachsignal keinem Eintrag in der Zulassungstabelle zugeordnet werden kann, so wird im einfachsten Fall die Kommunikationsverbindung unterbrochen, indem ein unterbrechendes Signal erzeugt oder das Endgerät nur kurz deaktiviert wird. Im Prinzip ist dann sofort nach dem Abbruch der Kommunikationsverbindung ein erneuter Verbindungsaufbau möglich.

Um hartnäckigen Mißbrauchsversuchen entgegenzutreten, kann des weiteren die Anzahl der Mißbrauchsversuche innerhalb eines bestimmten Zeitintervalls gespeichert sowie ein kritischer Wert für die maximal tolerierbare Anzahl festgesetzt werden. Liegten die Anzahl der Mißbrauchversuche oberhalb dieses Wertes, so wird automatisch eine Totalsperrung des Anschlusses veranlaßt. Der Anschluß kann dann erst wieder nach einer bestimmten Karenzzeit oder durch Eingabe eines entsperrenden Codes entriegelt werden. Zusätzlich kann, wie auch beim normalen Abbruch wegen Mißbrauch, ein Alarmsignal am Telefon selbst oder in einer Zentrale erzeugt werden.

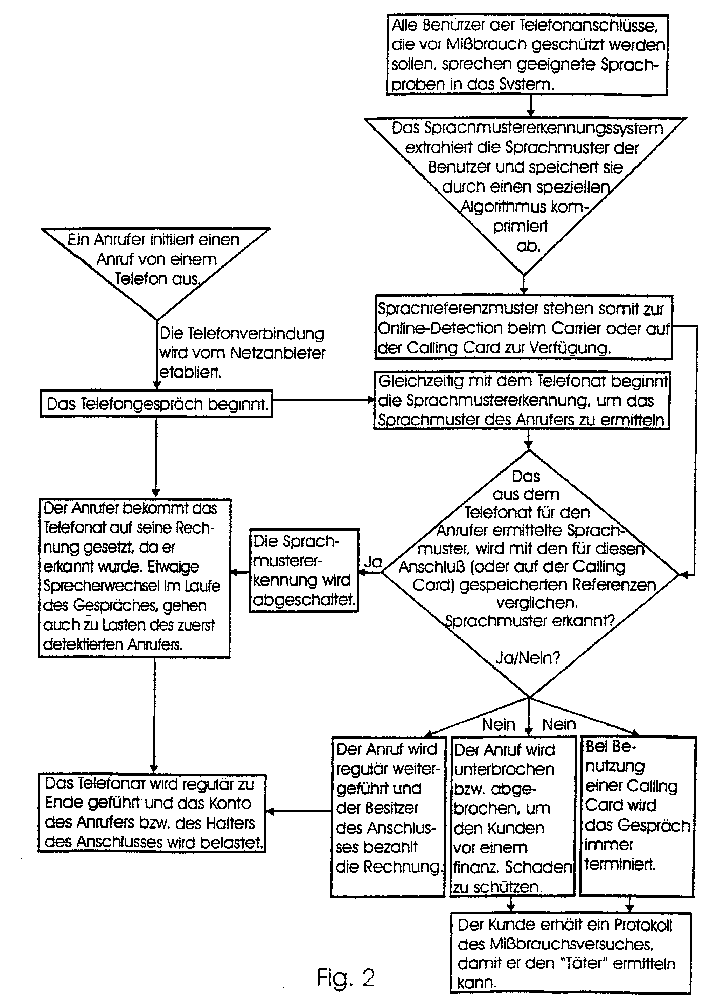

Figur 2 zeigt ein weiteres Ablaufdiagramm des erfindungsgemäßen Verfahrens. Vor Verfahrensbeginn sprechen alle Benutzer des Telefonanschlusses, die vor Mißbrauch geschützt werden sollen, Sprachproben in das System. Die Spracherkennungseinheit bzw. ein Sprachmustererkennungssystem extrahiert die Sprachmuster der Benutzer und speichert sie, komprimiert durch einen Spracherkennungs-Algorithmus, als Referenzdaten ab. Die Sprachreferenzmuster stehen somit zur Online-Erkennung beim Netzanbieter, in einer Nebenstellenanlage oder auf der Calling Card eines Mobiltelefons zur Verfügung.

Das Verfahren beginnt, nachdem ein Anrufer von einem Telefon aus einen Anruf initiiert, die Telefonverbindung vom Netzanbieter etabliert wird und das Telefongespräch beginnt. Gleichzeitig mit dem Telefonat beginnt die Sprachmustererkennung, um das Sprachmuster des Anrufers zu ermitteln. Dieses aus dem Telefonat für den Anrufer ermittelte Sprachmuster wird mit den für diesen Anschluß oder auf der Calling Card eines Mobiltelefons gespeicherten Referenzen verglichen.

Falls ein Sprachmuster erkannt wurde, d.h. eine Zuordnung des aktuellen Sprachsignals zu einer Referenz getroffen wurde, wird die Sprachmustererkennung für diese Kommunikationsverbindung abgeschaltet; ihre Rechenkapazität kann zur Analyse weiterer Gespräche dienen

Falls kein Sprachmuster erkannt wurde, wird der Anruf unterbrochen, um den Kunden vor einem finanziellen Schaden zu schützen. Bei der Benutzung eines Mobiltelefons mit Calling Card wird das Gespräch immer terminiert. Gegebenenfalls kann der Kunde ein Protokoll des Mißbrauchsversuchs erhalten, damit er die unberechtigt telefonierende Person ermitteln kann.

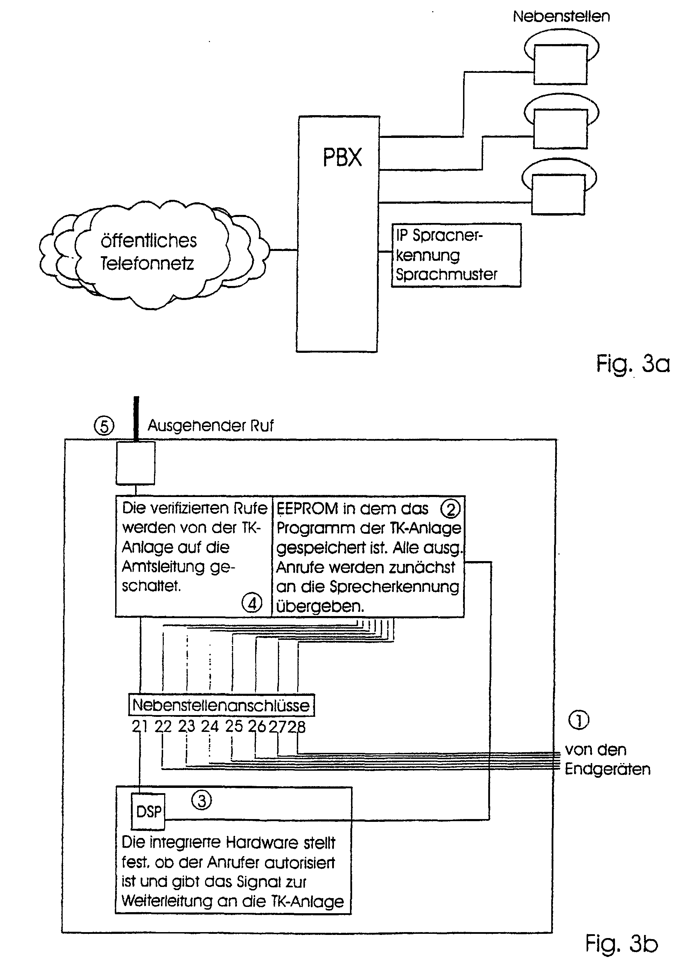

In den Figuren 3 bis 5 sind drei Möglichkeiten für die Umsetzung des erfindungsgemäßen Verfahrens in einem Kommunikationsnetz dargestellt.

Figur 3A zeigt dazu eine Nebenstellenanlage PBX, welche an ein öffentliches Telefonnetz angeschlossen ist. Die Nebenstellenanlage PBX weist eine Vielzahl von Nebenstellen auf, von denen hier drei dargestellt sind. Die Zugangsberechtigung der Nutzer der einzelnen Nebenstellen soll erfindungsgemäß überwacht werden. Dazu ist der Nebenstellenanlage PBX eine Steuereinheit IP (Intelligent Peripheral) zugeordnet, welche imstande ist, auf die Telefonleitung, über welche Signale von einer Nebenstelle an einen weiteren Anschluß außerhalb der Nebenstellenanlage übertragen werden, zuzugreifen und die vom Nebenstellennutzer eingegebenen Signale aufzuzeichnen und zu speichern. Das IP weist weiterhin eine Spracherkenungseinheit auf, welche das aufgezeichnete Sprachsignal zu analysieren und mit bereits hinterlegten Referenzdatensätze zu vergleichen imstande ist. Dazu ist das IP auch imstande, auf den Referenzdatensatz-Speicher zuzugreifen. Dabei sind entweder jeder Nebenstelle bestimmte Referenzdatensätze zugewiesen, welche den Nutzern dieser Nebenstelle zugeordnet sind oder die Zulassungstabelle enthält sämtliche potentielle Nutzer der gesamten Nebenstellenanlage unabhängig vom tatsächlichen Nebenstellenanschluß.

Wenn das IP keine Zuordnung der aktuellen Sprachprobe zu einem der Referenzdatensätze treffen kann, veranlaßt es durch ein geeignetes Steuersignal die Nebenstellenanlage PBX zur Erzeugung eines die Verbindung unterbrechenden Signals. Dadurch wird die Verbindung eines Nebenstellenanschlusses über die Nebenstellenanlage zu einem Nutzer im öffentlichen Telefonnetz unterbrochen.

Figur 3B zeigt ein Beispiel für die Realisierung personenbezogener Gebührenzuweisung durch Spracherkennung in einer Nebenstellenanlage.

In der Nebenstellenanlage werden im Falle der prozeduralen Authentifizierung, also Spracherkennung vor Verbindungsaufbau, alle von den an Nebenstellenanschlüsse (Ports 22 bis 28) angeschlossenen Endgeräten kommenden Anrufe auf einen Port (am gezeichneten Beispiel Port 21) umgeleitet. Diese Umleitung wird von der Steuereinheit der Nebenstellenanlage vorgenommen, die entsprechenden Programme sind beispielsweise in einem Speicherbaustein, hier einem EEPROM, hinterlegt. An den Port 21 ist ein Digitaler Signalprozessor DSP mit geeigneter Spracherkennungssoftware und ggfs. -hardware angeschlossen. Er gibt bei positiver Identifizierung das Signal zur Weiterleitung an die Nebenstellenanlage über die üblichen Steuerfunktionen, d.h. entweder über den Anschluß, eine V.24 Schnittstelle oder eine sonstige Managementschnittstelle. Die so verifizierten Rufe werden von der Nebenstellenanlage (TK-Anlage) auf die Amtsleitung geschaltet und bilden einen ausgehenden Ruf. Die Vergebührungsinformation zur personenabhängigen Kostenzuweisung wird direkt in das Vergebührungssystem eingespeist.

Im Falle der Online-Erkennung des Sprechers wird das Gespräch schon aufgebaut, wie beim "Abhören" eines Gesprächs wird aber die Gesprächsinformation seriell über den DSP gelenkt. Diese analysiert die Sprache, ohne die Übertragung zu beeinträchtigen, und gibt entsprechende Informationen an die Nebenstellenanlage bzw. das Vergebührungssystem weiter.

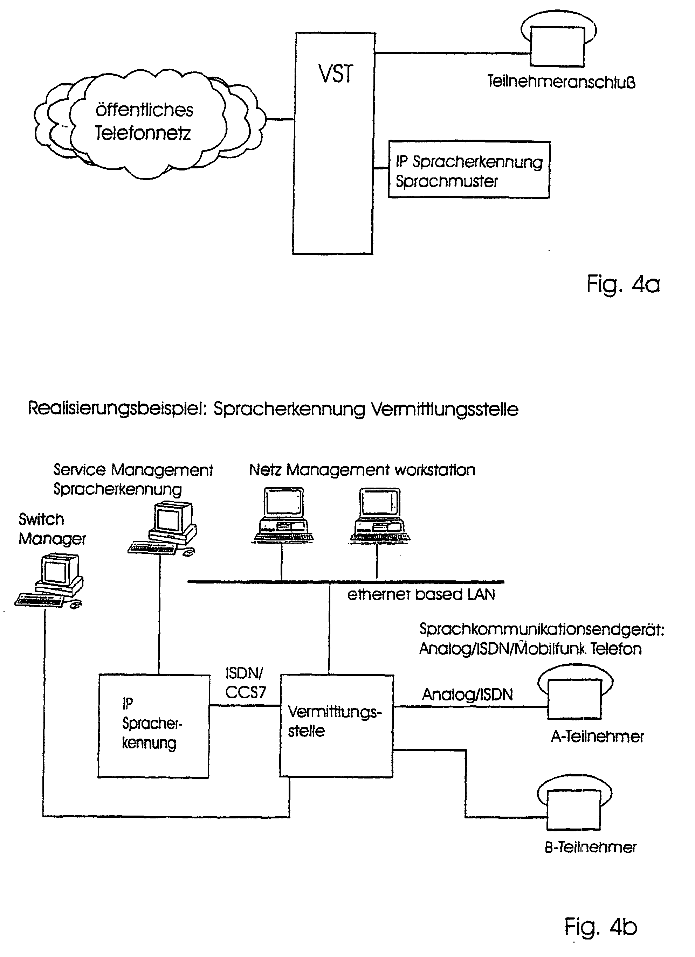

Figur 4A zeigt eine eine der Figur 3A entsprechende Anordnung der Steuereinheit IP in einer Vermittlungsstelle. Über diese Vermittlungsstelle wird eine Verbindung vom Teilnehmeranschluß zu einem weiteren Anschluß im öffentlichen Telefonnetz hergestellt. Die Vermittlungsstelle ist zwar räumlich und organisatorisch dem Teilnehmeranschluß zugeordnet, befindet sich jedoch nicht notwendig im unmittelbarer räumlicher Nähe. Abgesehen von der unterschiedlichen räumlichen Anordnung des IP wird die Zugangskontrolle hier so, wie bereits beschrieben, durchgeführt. Der Unterschied besteht darin, daß auf Seiten des Teilnehmers keine Intelligenz zur Spracherkennung und zur Sprachspeicherung zur Verfügung gestellt werden muß, da sie zentral in die Vermittlungsstelle integriert ist.

Figur 4B zeigt ein Beispiel für die Realisierung der Zugangskontrolle durch Spracherkennung in einer Vermittlungsstelle eines Telefonnetzes.

Das Spracherkennungssystem IP kann auf einem Computer, zum Beispiel in Form einer Steckkarte in der Vermittlungsstelle, realisiert werden. Anrufe, deren Sprecher identifiziert werden soll, werden von der Vermittlungsstelle über das IP geroutet.

Entweder wird die Spracherkennung in Dialogform realisiert, d.h. es wird eine Authentifikationsprozedur durchlaufen, wie oben unter Fig. 3B geschildert, oder aber die Sprache wird online erkannt. In letzterem. Falle wird das Sprachmuster während des laufenden Gespräches untersucht und Charakteristika der Sprache des sprechenden A-Teilnehmers mit den hinterlegten Mustern verglichen. In diesem Fall wird das Gespräch vom IP sozusagen abgehört, ohne es zu stören.

Eine mögliche Struktur bei der Authentifikationsprozedur ist die Einwahl in den DSP des IP. Der Telefonkanal wird dazu auf einen Eingang des IP gelenkt. Hier wird der A-Teilnehmer über die Software eines Intelligent Voice Response Systems, nach seinem Namen oder seiner Kennung gefragt. Danach wird er nach einem Kennwort bzw. seiner persönlichen Identifizierungsnummer PIN gefragt. Zum einen werden die Daten mit dem im Speicher hinterlegten Kennung verglichen, zum anderen wird das Sprachmuster, sei es über Frequenzspektren oder Sprachdynamik mit den hinterlegten Mustern verglichen. Bei der Dialogform ist die Realisierung der Spracherkennung sehr einfach, da es sich bei der Kennung um genau definierte Wörter handelt, die zuvor eingegeben wurden.

Nach der Authentifizierung im IP wird der Kunde in ein Menü geführt, das von ihm die Eingabe der gewünschten Rufnummern verlangt. Diese wird wie in herkömmlichen Messaging oder Voice Response Systemen erfaßt und in Puls- oder Mehrfrequenzwahlinformation umgewandelt ins Netz geschickt, oder als Signale im Format des Zeichengabesystems Nr. 7 (Common Channel Number 7, CCS7) an die Vermittlungsstelle weitergeleitet. Die Vermittlungsstelle leitet dann den Verbindungsaufbau zum B-Teilnehmer ein Die Verwendung von CCS7-Signalen erlaubt eine schnellere Abwicklung und mehr Leistungsmerkmale, nämlich alle im CCS7 realisierten und für das IP freigeschaltete.

Die Information über den Sprecher bzw. den identifizierten Referenzdatensatz geht als Steuerinformation über das CCS7 an die Vermittlungsstelle und erzeugt im Netz-Management-System einen Alarm. Dieses kann eine entsprechende Alarmmeldung auch über Call Data Records erzeugten so daß auch das Vergebührungssystem entsprechende Informationen erhält.

Die so erzeugten sprecheridentifizierenden Datensätze werden für die Zugangskontrolle genutzt, können aber auch für die Vergebührung eines Anrufs verwendet werden. Die entsprechenden Abläufe sind in den Flußdiagrammen beschrieben.

Bei der Erkennung kontinuierlicher Sprache konzentriert sich das System vorzugsweise auf die wesentlichen Charakteristika der Sprache. Zwar können Schlüsselwörter wie "Guten Tag", Hallo" u.a. bei der Eingabeprozedur berücksichtigt werden, im Grundsatz ist es aber nötig, sprecherspezifische Charakteristika zu hinterlegen, unabhängig davon, welche Sprache und mit wem der Teilnehmern spricht. Hierzu kann der Algorithmus statische Methoden wie Frequenzspektrum-Analyse ebenso wie dynamische Sprachcharakteristika verwenden.

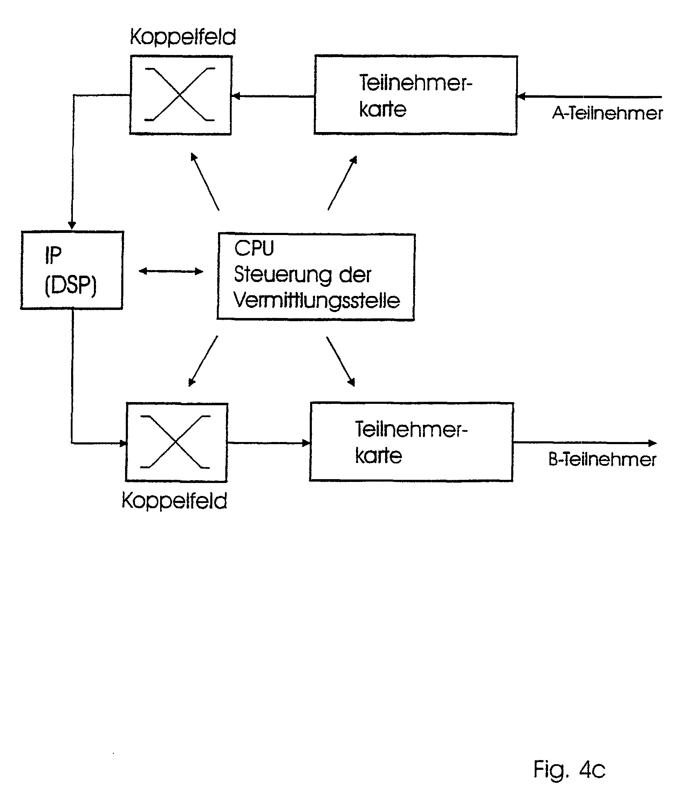

Figur 4C zeigt ein weiteres Beispiel für die Umsetzung des erfindungsgemäßen Verfahrens in einer Vermittlungsstelle. Die Teilnehmereinheit (Teilnehmerkarte) des A-Teilnehmers erkennt, ob der Teilnehmer Spracherkennung zur Zugangskontrolle vorgesehen hat. Der Zentralprozessor der Vermittlungsstelle CPU leitet das entsprechende Routing über das Koppelfeld, die eigentliche Vermittlungseinheit, ein. Dadurch wird der Anruf nicht direkt zum B-Teilnehmer bzw. zur nächsten Vermittlungsstelle weitergeleitet, sondern zuerst über ein Intelligent Peripheral IP mit einem Digitalen Signalprozessor DSP gelenkt. Der Ausgangsport des IP wird über das Koppelfeld zum B-Teilnehmer oder zur nächsten Vermittlungsstelle geführt.

Alle Steuerinformationen und damit auch das Ergebnis der Spracherkennung werden in der Vermittlungssstelle mit dem Zentralprozessor CPU abgeglichen.

Das IP kann auch mehrere Spracherkennungseinheiten bzw. DSPs enthalten und damit mehrere Leitungen gleichzeitig analysieren. Die Informationen über die Auslastung des IP und über Analyseergebnisse werden zur CPU übertragen.

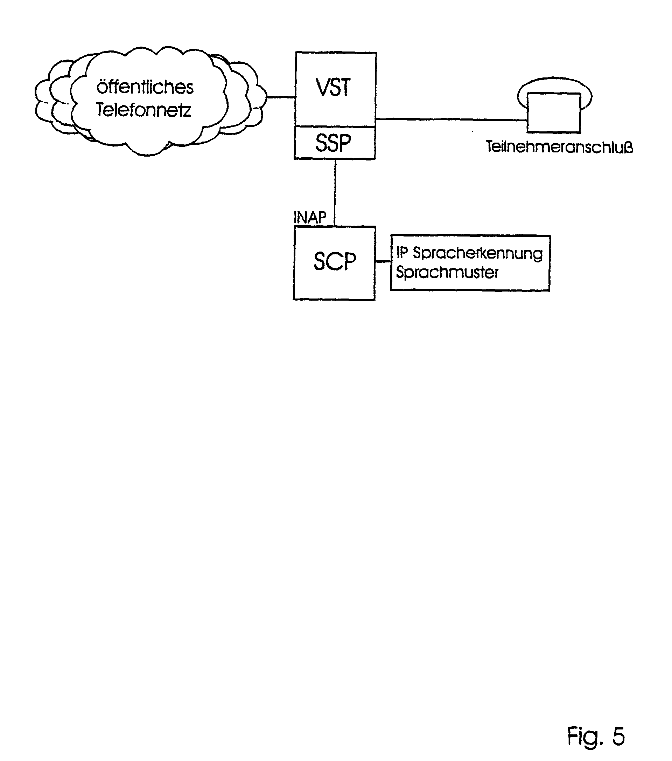

Figur 5 zeigt die Umsetzung des erfindungsgemäßen Verfahrens im Service Control Point SCP eines Intelligenten Netzes.

Bei der Realisierung im IN werden die Sprachdaten über einen ISDN-Kanal zur Spracherkennungseinheit IP gesteuert, welche sich am Ort d.es SCP befindet. Steuerinformationen, beispielsweise ob der rufende Anschluß Spracherkennung zur Mißbrauchskontrolle nutzt, Ergebnisse der Sprachanalyse und dergleichen, werden dann zwischen dem SCP und dem Service Switching Point SSP, der sich am Ort der Vermittlungsstelle befindet, ausgetauscht.

Die Umsetzung des erfindungsgemäßen Verfahrens im zentralistisch strukturierten IN ermöglicht eine zentrale Realisierung der sprachbasierten Mißbrauchskontrolle über eine große Netzfläche, d.h. eine Vielzahl von Anschlüssen. Notwendige Soft- und Härdwareaufrüstungen an den Vermittlungsstellen entfallen damit, nur das IN muß angepaßt werden. Diese Realisierung eignet sich daher besonders bei geringer Nachfrage oder in der Einführungsphase, d.h. wenn sich die Aufrüstung jeder Vermittlungsstelle noch nicht lohnt.

### Gewerbliche Anwendbarkeit:

Die Erfindung eignet sich inbesondere für Betreiber von Kommunikationsnetzen zur Erhöhung der Sicherheit Sprachtelefonie-Kunden gegen Mißbrauch. Die Erfindung eignet sich weiterhin inbesondere für Betreiber von Nebenstellenanlagen, bei denen regelmäßig das Problem des unberechtigten Zugangs besteht.

## Patentansprüche

1. Verfahren zur Kontrolle der Zugangsberechtigung für die Sprachtelefonie an einem Festnetz- oder Mobiltelefonanschluß, bei welchem
- vor oder nach Aufbau einer Kommunikationsverbindung zu einem gerufenen Teilnehmer Sprachsignale eines rufenden Teilnehmers mittels Spracherkennungs-Algorithmen analysiert und zum Zwecke der Zuordnung mit einem Referenzdatensatz oder mehreren Referenzdatensätzen verglichen werden, wobei die Sprachsignale des rufenden Teilnehmers an den gerufenen Teilnehmer weitergeleitet werden, falls die Kommunikationsverbindung bereits besteht und
- die Kommunikationsverbindung nicht hergestellt bzw. automatisch unterbrochen wird und/oder. ein Alarmsignal erzeugt wird, falls die Sprachsignale keinem Referenzdatensatz zugeordnet werden können,
a) vor oder nach Aufbau der Kommunikationsverbindung zum gerufenen Teilnehmer Sprachsignale des rufenden Teilnehmers aufgezeichnet werden,
b) der Referenzdatensatz bzw. die Referenzdatensätze ist bzw. sind dem Festnetz- bzw. Mobiltelefonanschluß in eindeutiger Weise zugeordnet ist bzw. sind, **dadurch gekennzeichnet, daß**
c) während der gesamten Kommumkationsverbindung in regelmäßigen zeitlichen Abständen Sprachproben aufgezeichnet werden und die Berechtigung des Sprechers in regelmäßigen zeitlichen Abständen überprüft wird.

2. Verfahren nach Anspruch 1, **dadurch gekennzeichnet,**
**daß** die Referenzdatensätze Referenz-Sprachproben sind, welche bestimmten, von einer Person gesprochenen Wörtern entsprechen, und die Spracherkennungs-Algorithmen die aufgezeichnete Sprachprobe hinsichtlich des Auftretens von Teilen, die mit der Referenz-Sprachprobe innerhalb einer vorgegebenen Toleranz übereinstimmen, analysiert.

3. Verfahren nach Anspruch 1 oder 2, **dadurch gekennzeichnet,**
**daß** die Referenzdatensätze Referenz-Sprachmustern entsprechen, die unabhängig vom Bedeutungsinhalt sind und für eine Person charakteristisch sind, z.B. einer bestimmten Frequenzverteilung gesprochener Sprache, und die Spracherkennungs-Algorithmen durch statistische Auswertung der aufgezeichneten Sprachprobe ein entsprechendes Sprachmuster derselben erstellen, welches mit den Referenz-Sprachmustern verglichen wird.

4. Verfahren nach Anspruch 1 oder 2, **dadurch gekennzeichnet,**
**daß** der Referenzdatensatz bzw. die Referenzdatensätze einem Nebenstellenanschluß einer Nebenstellenanlage in eindeutiger Weise zugeordnet ist bzw. sind.

5. Verfahren nach einem der vorangegangenen Ansprüche,
**dadurch gekennzeichnet,**
**daß** die Sprachprobe während eines vorbestimmten Zeitintervalls nach Beginn der Kommunikationsverbindung aufgezeichnet wird und danach die Aufzeichnung beendet wird.

6. Verfahren nach einem der vorangegangenen Ansprüche,
**dadurch gekennzeichnet,**
**daß** die zwischengespeicherte Sprachprobe nach Beendigung des Schrittes b) oder nach Beendigung der Kommunikationsverbindung gelöscht wird, falls sie einem Referenzdatensatz zugeordnet werden konnte, und ansonsten gespeichert bleibt.

7. Verfahren nach einem der vorangegangenen Ansprüche,
**dadurch gekennzeichnet,**
**daß** es nur zu vorbestimmten Tages- und/oder Wochenzeiten und/oder nur für vorbestimmte Anrufziele durchgeführt wird, wobei der Anschluß für Verbindungen außerhalb dieser Zeiten bzw. andere Anrufziele grundsätzlich gesperrt oder grundsätzlich freigeschaltet ist.

8. Verfahren nach einem der vorangegangenen Ansprüche,
**dadurch gekennzeichnet,**
**daß** das Verfahren nicht durchgeführt wird, wenn durch Eingabe einer Tastenkombination (PIN-Code) und/oder eines akustischen Signals vor Beginn der Kommunikationsverbindnung eine Zugangsberechtigung nachgewiesen wurde.

9. Verfahren nach einem der vorangegangenen Ansprüche,
**dadurch gekennzeichnet,**
**daß** die Anzahl der unberechtigten Zugangsversuche registriert wird und der Anschluß gesperrt wird, wenn innerhalb eines vorbestimmten Zeitintervalls mehr als eine vorbestimmte Anzahl derartiger Versuche erkannt wird.

10. Kommunikationsnetz mit einer Mehrzahl von Festnetz- oder Mobilfunkanschlüssen sowie technischen Mitteln zur Herstellung einer Kommunikationsverbindung zwischen zwei oder mehr Anschlüssen desselben oder eines anderen Kommunikationsnetzes, mit
a) Mitteln, die auf eine Datenleitung, über welche Sprachsignale vom rufenden Anschluß zum gerufenen Anschluß wenigstens teilweise übertragen werden, zuzugreifen und ein vom rufenden Anschluß übertragenes Sprachsignal aufzuzeichnen imstande sind;
b) wenigstens einem Speicher, in welchem Referenzdatensätze hinterlegt sind, welche einem zugangsberechtigten Personenkreis.zugeordnet sind;
c) wenigstens einer Steuereinheit mit einer Spracherkennungseinheit, welche auf den Speicher für die Referenzdatensätze zuzugreifen und das abgegriffene Sprachsignal mittels Spracherkennungs-Algorithmen zu analysieren und durch Vergleich mit den Referenzdatensätzen die Zugangsberechtigung des rufenden Teilnehmers festzustellen imstande ist, wobei die Steuereinheit die Erzeugung eines die Verbindung unterbrechenden Signals veranlaßt, wenn das Sprachsignal keinem der Referenzdatensätze zugeordnet werden kann,
**dadurch gekennzeichnet, daß** während der gesamten Kommunikationsverbindung in regelmäßigen zeitlichen Abständen Sprachproben aufgezeichnet werden und die Berechtigung des Sprechers in regelmäßigen zeitlichen Abständen überprüft wird.

11. Kommunikationsnetz nach Anspruch 10, **dadurch gekennzeichnet,**
**daß** Steuereinheit und Speicher innerhalb einer Telefonanlage, insbesondere einer Nebenstellenanlage, angeordnet sind, wobei die gespeicherten Referenzdatensätze Referenz-Sprachproben oder -Sprachmustern einzelner zugangsberechtigter Nebenstellezmutzer entsprechen.

12. Kommunikationsnetz nach Anspruch 10, **dadurch gekennzeichnet,**
**daß** Steuereinheit und Speicher einer Vermittlurigsstelle zugeordnet sind, wobei im Speicher die Referenzdaten der der Vermittlungsstelle zugeordneten Anschlüsse hinterlegt sind, und die Steuereinheit die Vermittlungsstelle zur Erzeugung eines die Verbindung unterbrechenden Signals oder eines Alarms veranlaßt, wenn das Sprachsignal keinem der Referenzdatensätze zugeordnet werden kann.

13. Kommunikationsnetz nach Anspruch 10, **dadurch gekennzeichnet,**
**daß** Steuereinheit und Speicher einem SCP (Service Control Point) eines Intelligenten Netzes zugeordnet sind und die Steuereinheit den SCP zur Erzeugung eines die Verbindung unterbrechenden Signals oder eines Alarms veranlaßt, wenn das Sprachsignal keinem der Referenzdatensätze zugeordnet werden kann.

14. Mobiles Endgerät für die Telekommunikation mit
a) Mitteln, die auf eine Datenleitung, über welche Sprachsignale in elektronischer Form übertragen werden, zuzugreifen und ein eingegebenes Sprachsignal aufzuzeichnen imstande sind;
b) wenigstens einem Speicher, in welchem wenigstens ein Referenzdatensatz bzw. mehrere Referenzdatensätze hinterlegt sind, welche einem zugangsberechtigten Personenkreis zugeordnet sind;
c) wenigstens einer Steuereinheit mit einer Spracherkennungseinheit welche auf den Speicher für die Referenzdatensätze zuzugreifen und das abgegriffene Sprachsignal mittels Spracherkennungs-Algorithmen zu analysieren und durch Vergleich mit den Referenzdatensätzen die Zugangsberechtigung des rufenden Teilnehmers festzustellen imstande ist, wobei die Steuereinheit die Erzeugung eines die Verbindung unterbrechenden Signals oder das Abschalten des Endgeräts veranlaßt, wenn das Sprachsignal keinem der Referenzdatensätze zugeordnet werden kann,
**dadurch gekennzeichnet, daß** während der gesamten Kommunikationsverbindung in regelmäßigen zeitlichen Abständen Sprachproben aufgezeichnet werden und die Berechtigung des Sprechers in regelmäßigen zeitlichen Abständen überprüft wird.

## Claims

1. Process for monitoring access authorization for speech telephony on a fixed-network or mobile-telephone access line in which
- before or after the setting up of a call to a called subscriber, speech signals of a calling subscriber are analyzed by means of speech recognition algorithms and are, for the purpose of association, compared with a reference data record or with a plurality of reference data records, the speech signals of the calling subscriber being forwarded to the called subscriber if the call has already been established and
- the call is not established or is automatically interrupted and/or an alarm signal is generated if the speech signals cannot be associated with a reference data record,
a) before or after the call has been set up to the called subscriber, speech signals of the calling subscriber are recorded,
b) the reference data record/reference data records is/are uniquely associated with the fixed-network or mobile-telephone access line, **characterized in that**
c) throughout the entire call, speech samples are recorded at regular time intervals and the authorization of the speaker is verified at regular time intervals.

2. Process according to claim 1, **characterized in that**
the reference data records are reference speech samples corresponding to certain words spoken by a person, and the speech recognition algorithms analyze the recorded speech sample with regard to the occurrence of parts which are identical within a given tolerance with the reference speech sample.

3. Process according to claim 1 or 2, **characterized in that**
the reference data records correspond to reference speech patterns which are independent of the meaning and are characteristic of a person, e.g. a certain frequency distribution of spoken language, and, through statistical evaluation of the recorded speech sample, the speech recognition algorithms produce a corresponding speech pattern thereof which is compared with the reference speech patterns.

4. Process according to claim 1 or 2, **characterized in that**
the reference data record/reference data records is/are uniquely associated with an extension access line of a private automatic branch exchange (PABX).

5. Process according to any one of the preceding claims, **characterized in that**
the speech sample is recorded during a predetermined time interval after the start of the call and the recording is thereafter terminated.

6. Process according to any one of the preceding claims, **characterized in that**
the temporarily stored speech sample is deleted after the end of step b) or after the end of the call if it was able to be associated with a reference data record, and otherwise remains stored.

7. Process according to any one of the preceding claims, **characterized in that**
said process is executed only at predetermined times of the day and/or week and/or only for predetermined call destinations, the access line being always disabled or always enabled for calls outside of those times or for other call destinations.

8. Process according to any one of the preceding claims, **characterized in that**
the process is not executed if, prior to the start of the call, proof has been furnished of access authorization through the entering of a key combination (PIN code) and/or audible signal.

9. Process according to any one of the preceding claims, **characterized in that**
the number of unauthorized access attempts is recorded and the access line is disabled if, within a predetermined time interval, more than a predetermined number of such attempts is detected.

10. Communication network with a plurality of fixed-network or mobile-radio access lines as well as with technical means for establishing a call between two or more access lines of the same or a different communication network, with
a) means which are capable of accessing a data line over which speech signals are transmitted at least in part from the calling access line to the called access line and of recording a speech signal transmitted from the calling access line;
b) at least one memory in which are stored reference data records which are associated with an access-authorized group of persons;
c) at least one control unit with a speech recognition unit capable of accessing the memory for the reference data records and of analyzing the picked-off speech signal by means of speech recognition algorithms and of determining the access authorization of the calling subscriber by comparison with the reference data records, the control unit initiating the generation of a signal interrupting the call if the speech signal cannot be associated with any of the reference data records,
**characterized in that**, throughout the entire call, speech samples are recorded at regular time intervals and the authorization of the speaker is verified at regular time intervals.

11. Communication network according to claim 10, **characterized in that**
control unit and memory are disposed within a telephone system, particularly a private automatic branch exchange (PABX), the stored reference data records corresponding to reference speech samples or reference speech patterns of individual access-authorized extension access line users.

12. Communication network according to claim 10, **characterized in that**
control unit and memory are associated with an exchange, the memory containing the reference data of the access lines associated with the exchange, and the control unit causing the exchange to generate either a signal interrupting the call or an alarm if the speech signal cannot be associated with any of the reference data records.

13. Communication network according to claim 10, **characterized in that**
control unit and memory are associated with an SCP (Service Control Point) of an intelligent network and the control unit causes the SCP to generate either a signal interrupting the call or an alarm if the speech signal cannot be associated with any of the reference data records.

14. Mobile terminal device for telecommunications with
a) means capable of accessing a data line over which speech signals are transmitted in electronic form and of recording an entered speech signal;
b) at least one memory containing at least one reference data record or a plurality of reference data records associated with an access-authorized group of persons;
c) at least one control unit with a speech recognition unit capable of accessing the memory for the reference data records and of analyzing the picked-off speech signal by means of speech recognition algorithms and of determining the access authorization of the calling subscriber by comparison with the reference data records, the control unit initiating the generation of a signal interrupting the call or causing the terminal device to be disconnected if the speech signal cannot be associated with any of the reference data records,
**characterized in that**, throughout the entire call, speech samples are recorded at regular time intervals and the authorization of the speaker is verified at regular time intervals.

## Revendications

1. Procédé de contrôle de l'autorisation d'accès en téléphonie vocale sur un raccordement téléphonique fixe ou mobile, dans lequel
- avant ou après l'établissement d'une communication avec un abonné appelé, les signaux vocaux d'un abonné appelant sont analysés au moyen d'algorithmes de reconnaissance vocale et sont comparés pour concordance avec un ou plusieurs enregistrements de référence, les signaux vocaux de l'abonné appelant étant transmis à l'abonné appelé si la communication est déjà établie et
- la communication n'est pas établie ou est interrompue automatiquement et/ou un signal d'alarme est généré si les signaux vocaux ne concordent avec aucun enregistrement de référence,
a) avant ou après l'établissement de la communication vers l'abonné appelé des signaux vocaux de l'abonné appelant sont enregistrés,
b) l'enregistrement ou les enregistrements de référence correspond(ent) de façon univoque au raccordement téléphonique fixe ou mobile,
**caractérisé en ce que**
c) pendant toute la communication, des échantillons de parole sont enregistrés à intervalles réguliers et **en ce que** l'autorisation du locuteur est vérifiée à intervalles réguliers.

2. Procédé selon la revendication 1, **caractérisé en ce que**
les enregistrements de référence sont des échantillons de parole de référence lesquels correspondent à des mots déterminés prononcés par une personne et **en ce que** les algorithmes de reconnaissance vocale analysent l'échantillon de parole enregistré en ce qui concerne l'apparition de parties qui coïncident avec l'échantillon de parole de référence dans des limites de tolérance données.

3. Procédé selon l'une des revendications 1 ou 2, **caractérisé en ce que**
les enregistrements de référence correspondent à des modèles vocaux de référence indépendants du contenu sémantique et caractéristiques d'une personne, p. ex. à une certaine distribution des fréquences dans le langage parlé et **en ce que** les algorithmes de reconnaissance vocale établissent par analyse statistique de l'échantillon de parole enregistré un modèle vocal lui correspondant, lequel est comparé aux modèles vocaux de référence.

4. Procédé selon l'une des revendications 1 ou 2, **caractérisé en ce que**
le ou les enregistrements de référence est ou sont affectés de façon univoque à un poste d'un autocommutateur privé .

5. Procédé selon l'une quelconque des revendications précédentes, **caractérisé en ce que**
l'échantillon de parole est enregistré pendant un intervalle de temps prédéfini après le début de la communication et **en ce qu'**il est ensuite mis fin à l'enregistrement.

6. Procédé selon l'une quelconque des revendications précédentes, **caractérisé en ce que**
l'échantillon de parole stocké provisoirement est effacé à la fin de la phase b) ou à l'issue de la communication s'il correspond à un enregistrement de référence et **en ce qu'**il reste mémorisé dans le cas contraire.

7. Procédé selon l'une quelconque des revendications précédentes, **caractérisé en ce**
**qu'**il n'est appliqué qu'à certaines périodes prédéfinies du jour ou de la semaine et/ou uniquement pour des destinations d'appel prédéfinies, le raccordement étant systématiquement bloqué ou systématiquement libre pour des liaisons en dehors de ces périodes ou vers d'autres destinations d'appels.

8. Procédé selon l'une quelconque des revendications précédentes, **caractérisé en ce que**
le procédé n'est pas appliqué si l'autorisation d'accès est attestée, avant le début de la communication, par l'entrée d'une combinaison de touches (code PIN) et/ou d'un signal acoustique.

9. Procédé selon l'une quelconque des revendications précédentes, **caractérisé en ce que**
le nombre de tentatives d'accès non autorisé est enregistré et le raccordement bloqué si, dans un intervalle temps prédéfini, le nombre enregistré de ces tentatives est supérieur à un nombre prédéfini.

10. Réseau de communication comportant plusieurs raccordements fixes ou mobiles ainsi que des moyens techniques destinés à l'établissement d'une communication entre deux ou plusieurs raccordements du même réseau de communication ou d'un autre réseau de communication, avec
a) des moyens capables d'accéder à une ligne de données par l'intermédiaire de laquelle des signaux vocaux sont transmis, au moins partiellement, du raccordement appelant au raccordement appelé et d'enregistrer un signal vocal transmis par le raccordement appelant ;
b) au moins une mémoire dans laquelle sont stockés des enregistrements de référence correspondant à un groupe de personnes autorisées ;
c) au moins une unité de commande comportant une unité de reconnaissance vocale capable d'accéder à la mémoire contenant les enregistrements de référence et d'analyser le signal vocal intercepté au moyen d'algorithmes de reconnaissance vocale et de vérifier, par comparaison avec les enregistrements de référence, l'autorisation d'accès de l'abonné appelant, l'unité de commande déclenchant la génération d'un signal interrompant la liaison lorsque le signal vocal ne correspond à aucun des enregistrements de référence,
**caractérisé en ce que**, pendant toute la communication, des échantillons de parole sont enregistrés à intervalles réguliers et **en ce que** l'autorisation du locuteur est vérifiée à intervalles réguliers.

11. Réseau de communication selon la revendication 10, **caractérisé en ce que**
l'unité de commande et la mémoire se trouvent à l'intérieur d'une installation téléphonique, en particulier d'un autocommutateur privé, les enregistrements de référence mémorisés correspondant à des échantillons de parole ou des modèles vocaux de référence de différents utilisateurs de postes supplémentaires autorisés.

12. Réseau de communication selon la revendication 10, **caractérisé en ce que**
l'unité de commande et la mémoire correspondent à un central téléphonique, les données de référence des raccordements affectés au central téléphonique étant enregistrées dans la mémoire, et **en ce que** l'unité de commande fait générer par le central téléphonique un signal interrompant la liaison ou une alarme lorsque le signal vocal ne correspond à aucun des enregistrements de référence.

13. Réseau de communication selon la revendication 10, **caractérisé en ce que**
l'unité de commande et la mémoire correspondent à un SCP (Service Control Point) d'un réseau intelligent et **en ce que** l'unité de commande fait générer par le SCP un signal interrompant la liaison ou une alarme lorsque le signal vocal ne correspond à aucun des enregistrements de référence.

14. Terminal mobile de télécommunications comportant
a) des moyens capables d'accéder à une ligne de données par l'intermédiaire de laquelle des signaux vocaux sont transmis sous forme électronique et d'enregistrer un signal vocal entré;
b) au moins une mémoire dans laquelle sont enregistrés au moins un ou plusieurs enregistrements de référence lesquels correspondant à un groupe de personnes autorisées ;
c) au moins une unité de commande comportant une unité de reconnaissance vocale capable d'accéder à la mémoire contenant les enregistrements de référence et d'analyser le signal vocal intercepté au moyen d'algorithmes de reconnaissance vocale et de vérifier, par comparaison avec les enregistrements de référence, l'autorisation d'accès de l'abonné appelant, l'unité de commande déclenchant la génération d'un signal interrompant la liaison lorsque le signal vocal ne correspond à aucun des enregistrements de référence,
**caractérisé en ce que**, pendant toute la communication, des échantillons de parole sont enregistrés à intervalles réguliers et **en ce que** l'autorisation du locuteur est vérifiée à intervalles réguliers.
